# FASCICULE DE BREVET EUROPEEN

(11) **EP 1 552 694 B1**
(45) Date de publication et mention de la délivrance du brevet: **24.12.2008**
(21) Numéro de dépôt: 03798315.2
(22) Date de dépôt: 19.09.2003
(51) Int. Cl.: H04N 7/167, H04N 5/00

(54) **SYSTEME DE DECHIFFREMENT DE DONNEES A ACCES CONDITIONNEL**
DATENENTSCHLÜSSELUNGSSYSTEM FÜR BEDINGTEN ZUGANG
CONDITIONAL ACCESS DATA DECRYPTING SYSTEM

(30) Priorité: 27.09.2002 CH 16232002; 04.12.2002 CH 20482002
(43) Date de publication de la demande: 13.07.2005
(73) Titulaire: Nagravision SA, 1033 Cheseaux-sur-Lausanne (CH)
(72) Inventeur: NAHUM, Sylvain-Victor, CH-1208 Genève (CH); STRANSKY, Philippe, CH-1033 Cheseaux-sur-Lausanne (CH)
(74) Mandataire: Wenger, Joel-Théophile
(86) Numéro de dépôt international: PCT/IB2003/004121
(87) Numéro de publication internationale: WO 2004/030363

(56) Documents cités:
- EP-A- 1 111 923
- EP-A- 1 182 874
- WO-A-02/21835
- WO-A-02/052515
- US-A- 5 901 339
- VAN RIJNSOEVER B J ET AL: "Interoperable content protection for digital TV" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 juillet 2000 (2000-07-30), pages 1407-1410, XP010512769 ISBN: 0-7803-6536-4
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

La présente invention concerne un système de déchiffrement de données à accès conditionnel.

De tels systèmes sont notamment utilisés dans le domaine de la télévision numérique à péage. Dans ce cas, le flux numérique de données transmis vers le téléviseur est chiffré afin de pouvoir en contrôler l'utilisation et de définir des conditions pour une telle utilisation. Ce chiffrement est réalisé grâce à des mots de contrôle (Control Words) qui sont changés à intervalle régulier (typiquement entre 5 et 30 secondes, bien que des intervalles nettement plus longs puissent être utilisés) afin de dissuader toute attaque visant à retrouver un tel mot de contrôle.

Pour que le récepteur puisse déchiffrer le flux chiffré par ces mots de contrôle, ces derniers lui sont envoyés indépendamment du flux dans des messages de contrôle (ECM) chiffrés par une clé propre au système de transmission entre un centre de gestion et un module de sécurité de l'unité d'utilisateur. En effet, les opérations de sécurité sont effectuées dans un module de sécurité (SC) qui est généralement réalisé sous la forme d'une carte à puce, réputée inviolable. Ce module peut être soit de type amovible soit directement intégré au récepteur,

Lors du déchiffrement d'un message de contrôle (ECM), il est vérifié, dans le module de sécurité (SC), que le droit pour accéder au flux considéré est présent. Ce droit peut être géré par des messages d'autorisation (EMM) qui chargent un tel droit dans le module de sécurité. D'autres possibilités sont également envisageables telles que l'envoi de clés de déchiffrement.

Pour la suite de l'exposé, on appellera "événement" un contenu vidéo, audio (par exemple MP3) ou données (programme de jeu par exemple) qui est chiffré selon la méthode connue des mots de contrôle, chaque événement pouvant être chiffré par un ou plusieurs mots de contrôle, chacun ayant une durée de validité déterminée.

La comptabilisation de l'utilisation de tels événements est aujourd'hui basée sur le principe de l'abonnement, de l'achat d'événements ou du paiement par unité de temps.

L'abonnement permet de définir un droit associé à un ou des canaux de diffusion transmettant ces événements et permet à l'utilisateur d'obtenir ces canaux en clair si le droit est présent dans son module de sécurité.

Parallèlement, il est possible de définir des droits propres à un événement, tel qu'un film ou un match de football. L'utilisateur peut acquérir ce droit (achat par exemple) et cet événement sera spécifiquement géré par ce droit. Cette méthode est connue sous l'appellation "pay-per-view" (PPV).

Pour ce qui concerne le paiement par unité de temps, le module de sécurité comprend un crédit qui est débité en fonction de la consommation réelle de l'utilisateur. Ainsi par exemple, une unité sera débitée chaque minute à ce crédit quel que soit le canal ou l'événement regardé. Il est possible selon les implémentations techniques, de varier l'unité de comptabilisation, soit dans la durée, soit dans la valeur du temps alloué, voire en combinant ces deux paramètres pour adapter la facturation au type d'événement transmis.

Un message de contrôle (ECM) ne contient pas uniquement le mot de contrôle, mais également les conditions pour que ce mot soit renvoyé au récepteur/décodeur. Lors du déchiffrement des mots de contrôle, il sera vérifié si un droit associé aux conditions d'accès énoncées dans le message est présent dans le module de sécurité.

Le mot de contrôle n'est retourné à l'unité d'utilisateur que lorsque la comparaison est positive. Ce mot de contrôle est contenu dans un message de contrôle ECM qui est chiffré par une clé de transmission.

Pour que le droit soit présent dans le module de sécurité, il est généralement chargé dans ce module par un message d'autorisation (EMM) qui pour des raisons de sécurité, est généralement chiffré par une clé différente dite clé de droit (RK).

Selon une forme connue de diffusion de télévision à péage, les trois éléments suivants sont nécessaires pour déchiffrer un événement à un moment donné:
- les données relatives à l'événement chiffré par un ou une pluralité de mots de contrôle (CW),
- le ou les messages de contrôle ECM contenant les mots de contrôle (CW) et les conditions d'accès (AC)
- le droit correspondant stocké dans le module de sécurité permettant de vérifier les dites conditions d'accès.

Les systèmes de déchiffrement du type décrit ci-dessus sont actuellement tous formés d'équipements relativement grands. Ils sont reliés à un dispositif d'exploitation ou de visualisation tel que par exemple une télévision au moyen d'un câble. Ils ne sont pas prévus pour pouvoir être déplacés facilement. Il n'est donc pas possible de déplacer son propre décodeur et de le raccorder simplement sur une autre télévision, et d'acquérir des droits ponctuels. De plus, dans les systèmes actuels, relativement peu d'installations ont une ligne de retour permettant de communiquer depuis le décodeur vers un centre de gestion. Les installations qui ont une ligne de retour n'ont généralement pas d'interface permettant de communiquer de façon conviviale avec ce centre de gestion. En effet, les lignes de retour sont prévues pour une communication entre le décodeur et le centre de gestion, mais pas entre l'utilisateur et ce centre. Il est ainsi malaisé d'acquérir des droits ponctuels de façon rapide et simple. De plus, dans tous les systèmes connus, les flux contenant les données, les messages de contrôle et les messages d'autorisation proviennent d'une source unique qui gère ses propres abonnements, sans pouvoir offrir une gamme d'abonnements de différentes sources.

La communication avec un centre de gestion a été améliorée dans des systèmes permettant de charger des droits ponctuels. Un tel système est décrit dans le brevet américain US 5,901,339. Ce document décrit un système comportant plusieurs centres de diffusion de données ou d'événements chiffrés, destinés à transmettre ces événements à un système d'exploitation tel qu'un téléviseur ou un autre moyen d'affichage. Ces événements sont associés d'une part à un numéro d'identification unique et d'autre part à un code de déchiffrement. Le système comprend également un centre de chargement auquel sont transmis, avant la diffusion des événements, le numéro d'identification de chaque événement, associé au code de déchiffrement. Lorsqu'un utilisateur souhaite acquérir des droits pour déchiffrer un événement chiffré, il appelle le centre de chargement au moyen d'un appareil de communication tel qu'un téléphone, et indique le numéro d'identification de l'événement qu'il veut acquérir. Le centre de chargement transmet à l'appareil de communication, le code de déchiffrement de l'événement considéré. A son tour, l'appareil de chargement transmet ce code au décodeur de l'utilisateur. Lorsque l'événement est diffusé, le décodeur possède le code de déchiffrement et l'événement peut être déchiffré et visionné.

Ce système implique un certain nombre de contraintes. En particulier, comme le code de déchiffrement est reçu sur demande de l'utilisateur, il n'est pas commode d'utiliser plusieurs codes pour un même événement. Ce code doit rester le même pendant toute la durée de cet événement. Ceci présente un inconvénient du point de vue de la sécurité. A titre de comparaison, dans les systèmes actuels, les mots de contrôle utilisés pour le chiffrement et de déchiffrement d'événements sont changés à des intervalles qui peuvent varier de 2 à 30 secondes environ.

Dans le système selon US 5,901,339, plusieurs centres de diffusion sont connectés à un seul centre de chargement. Cela implique notamment que tous les diffuseurs doivent placer leurs moyens cryptographiques dans le même centre de chargement, ce qui n'est pas optimal du point de vue sécuritaire.

Ce système présente également d'autres défauts relatifs à la sécurité. D'une part, la transmission du code de déchiffrement entre le centre de chargement et le décodeur de l'utilisateur se fait au moyen d'une ligne téléphonique via un téléphone sans moyen de sécurité. Cela implique qu'il est relativement aisé d'obtenir ce code de façon illégale et de l'utiliser en relation avec un autre décodeur. D'autre part, comme le centre de chargement ne dispose d'aucune information concernant le décodeur qui demande le code de déchiffrement, il est possible d'utiliser ce code sur n'importe quel décodeur. Cela signifie qu'une fois acquis en toute légalité, le code de déchiffrement peut être facilement transmis à d'autres décodeurs pour déchiffrer illégalement un événement ou des données.

Le document "EBU Technical Review" Winter 1995 N°. 266 intitulé "Functional model of a conditional access system" décrit différentes variantes de systèmes à accès conditionnel destinés notamment à la télévision à péage, ces systèmes utilisant un déchiffrement à deux niveaux, à savoir un premier niveau sécurisé au moyen de messages de contrôle ECM et un deuxième niveau utilisant des messages d'autorisation EMM. Dans l'une de ces variantes, le système à accès conditionnel est destiné à être utilisé simultanément par plusieurs diffuseurs de données à accès conditionnel. Le système tel que décrit comporte notamment un système de gestion des droits, en charge de générer et d'envoyer les messages d'autorisation EMM, et un système de gestion d'autorisations en charge de générer des mots de contrôle pour le chiffrement des données des diffuseurs.

Dans tous les exemples représentés et décrits dans ce document, chaque diffuseur est associé de façon univoque à un système de gestion des droits. Il n'est pas possible d'associer un seul diffuseur à plusieurs systèmes de gestion de droits. Dans le système selon ce document, le fait d'utiliser un ou plusieurs fournisseurs de services est totalement transparent pour l'utilisateur. En effet, celui-ci ne peut pas choisir un opérateur ou un autre, il peut uniquement choisir un service, qu'il y ait un ou plusieurs opérateurs.

Ce système ne permet pas de résoudre les problèmes liés au déplacement simple du décodeur et à l'acquisition de droits ponctuels, ni le problème de communication entre l'utilisateur et le centre de gestion.

La présente invention se propose de pallier les inconvénients des systèmes de l'art antérieur et de réaliser un système qui puisse facilement être déplacé et utilisé sur pratiquement n'importe quel dispositif d'exploitation adapté. De plus, un tel système simplifie la gestion des droits d'accès au niveau du centre de diffusion et offre une plus grande souplesse à l'utilisateur tout en garantissant une sécurité optimale telle que les informations obtenues par un utilisateur et destinées à un décodeur déterminé ne peuvent pas être utilisées sur un autre décodeur.

Ces buts sont atteints par un système de déchiffrement de données à accès conditionnel, tel que défini dans la revendication 1.

La présente invention et ses avantages seront mieux compris en référence à la description de différents modes de réalisation et aux dessins annexés, dans lesquels :
- la figure 1 représente une vue d'ensemble d'un premier mode de réalisation du système selon la présente invention; et
- la figure 2 est une vue d'ensemble d'un deuxième mode de réalisation de l'invention.

En référence à ces figures, le système de l'invention comporte essentiellement un centre de diffusion 10 agencé pour diffuser des données chiffrées, au moins un centre de gestion 11 agencé pour diffuser des messages d'autorisation (EMM) et traiter la gestion de droits d'accès aux données chiffrées, un dispositif d'exploitation 12 destiné à rendre utilisables, ces données chiffrées et un décodeur 13 agencé pour déchiffrer au moins une partie des données chiffrées.

Le centre 10 de diffusion de données chiffrées peut être un dispositif classique par câble ou par satellite notamment. Ce centre émet des données sous forme chiffrées. La nature de ces données dépend bien entendu de l'utilisation qui doit en être faite. Dans la suite du texte, il est supposé que les données sont utilisées dans un système de télévision à accès conditionnel. Les données sont donc formées d'un contenu vidéo CT, c'est-à-dire des images et du son. D'autres données spécifiques à l'utilisation peuvent également être inclues, de façon bien connue de l'homme du métier. Ces données, ou au moins une partie d'entre elles, sont chiffrées au moyen de mots de contrôle et sont notées cw(CT) sur les figures.

Selon une première forme de réalisation, les mots de contrôle cw sont transmis, sous forme chiffrée, par le centre de diffusion en même temps que les données chiffrées. Selon une autre forme de réalisation, ces mots de contrôle peuvent être diffusés par le centre de gestion 11 du fait que l'encryption du message de contrôle, comprenant le mot de contrôle, est spécifiquement géré selon un protocole propre à chaque centre de gestion.

L'appellation "message personnel" représente un message d'autorisation (EMM) dans le cas où les messages de contrôle (ECM) sont non spécifiques, ces messages personnels permettant l'accès aux données par la mise en mémoire d'un droit. Le mot de contrôle est extrait de ce message et envoyé au module de réception généralement sous forme chiffrée, de sorte que les mots de contrôle ne peuvent pas être copiés à ce niveau et envoyés à un autre utilisateur.

Le ou plus généralement les centres de gestion 11 sont chargés de gérer les droits d'accès aux données. Ils peuvent chacun gérer des types de droits différents, notamment des abonnements, des accès ponctuels, des bouquets de programmes différents. Pour réaliser ceci, ils diffusent également les messages d'autorisation (EMM) correspondants, à destination des décodeurs concernés.

Le dispositif d'utilisation 12 est également bien entendu adapté aux données à transmettre. Dans le cas choisi de la télévision à accès conditionnel, le dispositif d'exploitation est un téléviseur.

Le décodeur 13 comporte un module de réception et de déchiffrement 14 des données et un module de gestion 15 des droits d'accès à ces données. Le module de gestion des droits est réalisé de telle façon qu'il soit aisément portable. Il peut judicieusement être réalisé au moyen d'un téléphone portable. Le module de gestion comporte également un module de sécurité 16. Ce module de réception et de déchiffrement peut comprendre des moyens de communication standardisé avec le module de gestion. Ainsi, le module de réception est capable de dialoguer avec n'importe quel module de gestion.

Un module de sécurité évolué peut comprendre des zones mémoires propres à chaque centre de gestion. Dans le cas d'un téléphone portable, l'opérateur de téléphonie peut allouer des zones mémoires qui seront ensuite initialisée par des paramètres propres à chaque centre de gestion. Ces paramètres sont par exemple une clé de décryption des messages d'autorisation (EMM), l'identification de l'abonné selon le système propre audit centre de gestion, voire un crédit.

Dans le cas où des opérateurs différents ne souhaitent pas intégrer leur sécurité sur un module commun, ou simplement pour augmenter la souplesse d'utilisation, il est possible de prévoir une connectique permettant soit de changer facilement de module de sécurité, soit d'en utiliser plusieurs à la fois. Ces modules peuvent être réalisés sous la forme d'une carte à puce coopérant avec un lecteur approprié du module de gestion ou sous une forme plus compacte permettant la mise en place de plusieurs modules de sécurité simultanément. Dans ce cas, chaque puce gère les autorisations provenant de l'un des centres de gestion.

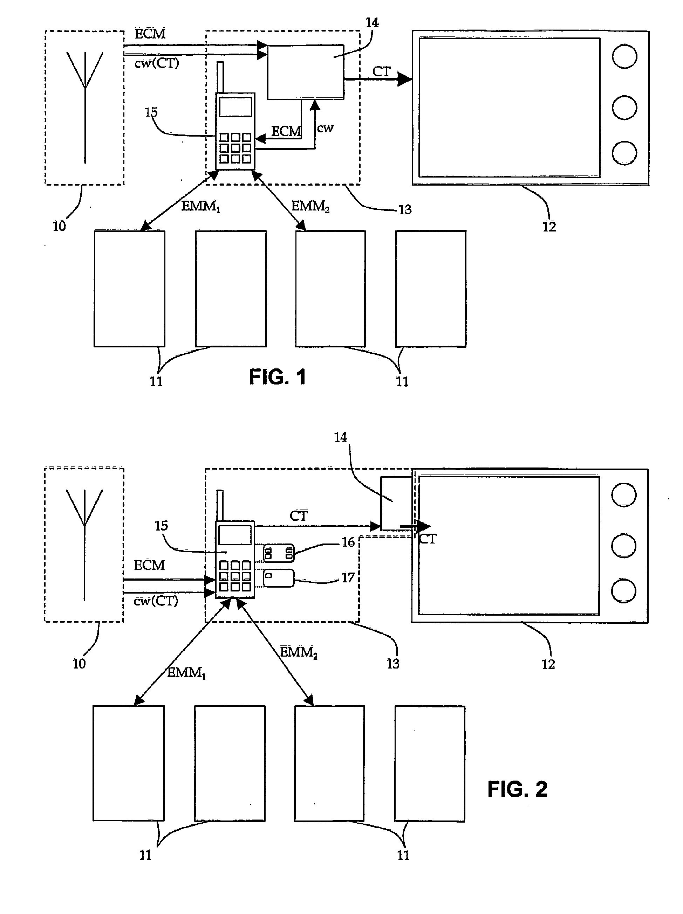

Il est également possible de prévoir une carte ou un autre support comportant plusieurs puces, chacune d'elles gérant les autorisations provenant de l'un des centres de gestion. Un tel module de sécurité est illustré par la figure 2, sous la référence 16.

Le module de sécurité, ou chacun des modules lorsqu'il y en a plusieurs, contient un numéro d'identification unique (UA) et des données propres aux centres de gestion 11 avec lesquels ces modules sont autorisés à communiquer. Cela signifie qu'avant de pouvoir obtenir et déchiffrer un message d'autorisation (EMM) provenant d'un centre de gestion, les données relatives à ce centre de gestion doivent avoir été préalablement chargées dans le module de sécurité. Les données propres au centre de gestion sont par exemple une clé de chiffrement ou un code permettant de former une clé de chiffrement, ces données permettant de sécuriser la liaison entre le centre de gestion et le module de sécurité. Selon un mode de réalisation avantageux, les messages d'autorisation EMM sont envoyés au module de sécurité sous forme chiffrée au moyen d'une clé qui dépend à la fois du centre de gestion concerné et du numéro d'identification unique UA de ce module de sécurité. De cette manière, un message d'autorisation reçu par un module de sécurité ne pourra pas être utilisé par un autre module. De plus, un module falsifié, ne contenant pas les données propres au centre de gestion ne pourra pas utiliser le message d'autorisation puisqu'il ne sera pas capable de le déchiffrer.

Le module de gestion 15 comporte avantageusement un lecteur de carte à puce destiné à être utilisé avec une carte de crédit ou une carte à prépaiement 17. De cette façon, la gestion des paiements est assurée lorsqu'un évènement est commandé. Ceci permet en outre d'utiliser le module de gestion comme porte-monnaie électronique. Une telle carte est illustrée sous la référence 17 dans la figure 2.

Selon un mode de réalisation mettant en oeuvre plusieurs centres de gestion pour les données diffusées vers le module de réception, il est prévu d'adjoindre aux dites données chiffrées des informations descriptives pour permettre à l'utilisateur de se connecter sur le centre de gestion approprié. Ces informations descriptives sont transmises depuis le module de réception vers le module de gestion et affichées sur ledit module. L'utilisateur peut effectuer son choix et initier une communication avec un centre, pour autant que son module de sécurité supporte les fonctions de sécurité exigées par ce centre de gestion. Ces informations descriptives, en plus de décrire le produit vidéo ou audio, comprennent une adresse de type téléphonique ou Internet. Cette adresse sera utilisée pour le dialogue en vue de l'envoi du message personnel permettant de recevoir les droits ou les clés nécessaires à l'accès aux données chiffrées.

Le module de réception et de déchiffrement 14 des données peut être intégré directement dans l'appareil de télévision 12. Dans ce cas, pour pouvoir lire des données chiffrées sur un tel téléviseur, il suffit de disposer du module de gestion 15 et des droits correspondants à l'événement souhaité. Cet événement peut donc être visualisé à partir de n'importe quel téléviseur équipé de façon adéquate. Ce mode de réalisation est illustré schématiquement par la figure 2. Selon une autre forme de réalisation avantageuse, il peut être formé d'un boîtier qui peut être connecté à la télévision au moyen d'un câble de connexion ou directement par une sortie sur la télévision. Ceci permet d'utiliser de façon simple, la présente invention sur des téléviseurs existants.

Le système selon l'invention fonctionne de la manière suivante :

Comme mentionné précédemment, le contenu vidéo CT est diffusé par le centre de diffusion 10 de données chiffrées. Simultanément, ce premier centre diffuse également le ou les mots de contrôle cw qui ont été utilisés pour chiffrer les données. Lorsque l'on souhaite utiliser des données du système à accès conditionnel, par exemple, pour voir un événement tel qu'un film ou un match de football par exemple, pour lequel l'accès est soumis à un droit, il est tout d'abord nécessaire d'acquérir ce droit. Celui-ci peut être donné par une carte à pré-paiement disposée dans le module de gestion 15, ou il peut être chargé dans ce module grâce aux moyens de communication entre le module et l'un des centres de gestion 11, qui gère les droits d'accès.

Pour obtenir les messages d'autorisation EMM qui vont permettre le déchiffrement des mots de contrôle cw nécessaire au déchiffrement des données et donc à la visualisation de l'évènement, le module de réception et de déchiffrement 14 établi une communication avec l'un des centres de gestion. Comme mentionné précédemment, le modules de réception peut être formé d'un téléphone portable. Dans ce cas, le contact est établi en composant un numéro de téléphone correspondant au centre de diffusion. Le choix de l'événement pour lequel on souhaite acquérir les droits se fait au moyen d'un "menu" préenregistré, chaque choix du menu correspondant à un numéro particulier sur le clavier du téléphone portable. Le téléchargement du message d'autorisation correspondant à l'évènement choisi se fait après avoir pressé une touche de validation sur le clavier du téléphone. Ce message d'autorisation est avantageusement chiffré au moyen d'une clé dépendant à la fois du numéro d'identification unique UA du module de sécurité et des données propres au centre de gestion.

Le module de réception et de déchiffrement 14 est connecté au téléviseur, par exemple sur une sortie de celle-ci ou directement intégré dans le téléviseur.

Dans un premier mode de réalisation, le module de réception 14 reçoit, en provenance du premier dispositif de diffusion 10, les données chiffrées cw(CT) au moyen de mots de contrôle ainsi que les mots de contrôle cw eux-mêmes. Il reçoit également les messages d'autorisation EMM provenant d'un des centres de gestion 11. Le module de réception 14 transmet les mots de contrôle cw au module de gestion des droits. Cette transmission peut être effectuée au moyen d'ondes infrarouge ou radio par exemple. Ce module de gestion des droits vérifie qu'il a bien acquis les droits correspondants à l'événement choisi. Si tel est le cas, les messages de contrôle ECM sont traités dans le module de sécurité de façon à en extraire les mots de contrôle cw. Ceux-ci sont ensuite transmis, à une fréquence adéquate correspondant à la fréquence utilisée pour le chiffrement des données, au module de réception 14 qui les utilise alors pour déchiffrer les données et rendre ainsi visible l'événement.

Dans un deuxième mode de réalisation, illustré schématiquement par la figure 2, le flux contenant les données chiffrées, les messages de contrôle et les messages d'autorisation sont reçus par le dispositif de gestion des droits 15. Ces flux sont traités comme précédemment et les données déchiffrées sont transmises en clair au dispositif de réception.

Ce système permet de réaliser un décodeur aisément transportable et qui peut être utilisé sur n'importe quel téléviseur. Dans le cas où le module de réception des données 14 est intégré au téléviseur, il suffit de disposer du module de gestion 15 pour avoir accès à un événement. De cette façon, les contraintes pour les utilisateurs sont supprimées. En outre, le fait d'utiliser des centres de gestion pour les messages d'autorisation, distincts du centre de diffusion des données augmente le choix offert à l'utilisateur et facilite l'emploi de systèmes à accès conditionnel.

Du fait que les mots de contrôle sont déchiffrés dans le module de gestion et transmis vers le module de réception, la communication entre ces deux modules sera de préférence sécurisée. Pour cela, il existe différentes procédures d'appariement habituellement adaptées au couple formé par l'unité de sécurité et le décodeur. Dans notre cas, ces procédures sont appliquées entre le module de réception et le module de gestion. Un exemple de ce type d'appariement est décrit dans la demande WO 02/052515.

Pour garantir que les mots de contrôle ne sont pas disséminés vers d'autres modules de réception et de déchiffrement, et dans un schéma à deux niveaux c'est-à-dire lorsque le message de contrôle est de type personnel, le centre de gestion peut requérir une clé de chiffrement propre au module de déchiffrement. Cette clé est directement codée dans le module de déchiffrement et est unique pour chaque module.

Dans le cas où les messages de contrôle ECM contenant les mots de contrôle cw sont envoyés par le centre de gestion, ou dans le cas similaire où un événement est chiffré au moyen d'une seule clé qui est envoyée au module de sécurité par un centre de gestion, ce centre de gestion applique, sur un mot de contrôle donné, une encryption propre à la clé unique du module de déchiffrement, puis une encryption propre au système de télécommunication entre le centre de gestion et le module de sécurité au module de sécurité du module de gestion. Ainsi, si ce message était intercepté par un module de sécurité falsifié, le mot de contrôle obtenu serait inutilisable pour un autre module de déchiffrement car encore encrypté par la clé unique de ce module.

Selon un mode de réalisation, la liaison entre le module de gestion et le centre de gestion est une liaison point à point sécurisée. Il est dès lors possible de transmettre des commandes en relation avec les images et événements diffusés par le centre de diffusion. Cette fonction est utilisée pour placer des commandes via le module de gestion ou des réponses à des interrogations.

Dans une forme d'application, les images diffusées vers le décodeur sont des images réelles provenant de jeux de casino tels que la roulette, le black jack et le possesseur d'un tel module de gestion peut d'une manière interactive et en temps réel, jouer là où il se trouve. Les moyens de sécurité mis en place pour l'accès conditionnel aux données télédiffusées peuvent également être utilisées pour ce type d'application. Dans ce type d'application, le casino est relié au centre de gestion pour déterminer l'identité du porteur du module de gestion ou tout au moins que ce porteur soit solvable. Le centre de gestion alloue un crédit à ce porteur et communique cette information au casino.

## Revendications

1. Système de déchiffrement de données à accès conditionnel, ce système mettant en oeuvre :
- un centre de diffusion (10) agencé pour diffuser des données chiffrées par au moins un mot de contrôle (cw),
- au moins deux centres de gestion (11) agencés pour diffuser des messages personnels (ECM, EMM) relatifs à la gestion des moyens d'accès aux données chiffrées,
- un dispositif d'exploitation (12) destiné à rendre utilisables lesdites données chiffrées, et
- un décodeur (13) agencé pour déchiffrer au moins une partie des données chiffrées, placé entre le centre de diffusion (10) et le dispositif d'exploitation (12),
**caractérisé en ce que**
- le décodeur (13) est formé d'un module de réception et de déchiffrement (14) des données chiffrées et d'un module de gestion (15) des droits d'accès à ces données, ces modules étant physiquement distincts, le module de réception (14) étant connecté au dispositif d'exploitation (12) et le module de gestion (15) étant agencé pour communiquer avec le module de réception,
- **en ce que** le module de gestion (15) comporte un module de sécurité (16) comprenant un numéro d'identification unique (UA) et des données permettant de sécuriser la liaison entre les centres de gestion (11) et le module de sécurité (16), ce module de sécurité étant agencé pour vérifier le contenu des messages personnels (ECM, EMM) et pour permettre ou empêcher le déchiffrement du ou des mots de contrôle (cw) en fonction du contenu des messages personnels,
- **en ce que** le module de réception (14) reçoit les données chiffrées provenant desdits centres de diffusion (10) via une première voie de communication, et le module de gestion (15) reçoit les messages personnels (ECM, EMM) par le centre de gestion (11) via une deuxième voie de communication
- et **en ce que** le module de sécurité du module de gestion comprend des données propres auxdits centres de gestion (11) avec lesquels il est apte à communiquer.

2. Système de déchiffrement de données selon la revendication 1, **caractérisé en ce que** la communication entre le module de réception (14) et le module de gestion (15) est une communication par ondes.

3. Système de déchiffrement de données selon la revendication 1, **caractérisé en ce que** le module de gestion (15) des droits est un téléphone portable.

4. Système de déchiffrement de données selon la revendication 3, **caractérisé en ce que** le module de sécurité (16) comprend des fonctions d'identification nécessaires à la téléphonie, et au moins une zone mémoire propre à un centre de gestion (11), cette zone comprenant les paramètres de sécurité pour la réception des messages d'autorisation (EMM) dudit centre de gestion.

5. Système selon les revendications 1 à 4, **caractérisé en ce que** le centre de diffusion (10) est agencé pour diffuser des messages de contrôle (ECM) comprenant le ou les mots de contrôle (cw), et **en ce que** les messages personnels diffusés par les centres de gestion (11) correspondent à un message d'autorisation (EMM).

6. Système selon les revendications 1 à 4, **caractérisé en ce que** les centres de gestion (11) sont agencés pour diffuseur des messages personnels comprenant le ou les mots de contrôle (cw), le module de sécurité (16) du module de gestion (15) disposant des moyens pour déterminer si ce message lui est destiné et de moyens pour transmettre ce mot de contrôle (cw) au module de réception (14).

7. Système selon la revendication 6, **caractérisé en ce que** le module de réception et de déchiffrement (14) comprend une clé unique de décryption appliquée au mot de contrôle (cw), cette clé servant à encrypter les mots de contrôle au centre gestion (11) avant leur transmission vers le module de gestion (15).

8. Système de déchiffrement de données selon la revendication 1, **caractérisé en ce que** le module de sécurité (16) du module de gestion (15) comporte des paramètres de sécurité pour la réception des messages d'autorisation (EMM) provenant de centres de gestion (11) distincts.

9. Système de déchiffrement de données selon les revendications 1 à 8, le centre de diffusion (10) étant agencé pour transmettre des informations descriptives des données chiffrées, **caractérisé en ce que** ces données contiennent des indications nécessaires à l'établissement d'une communication avec le centre de gestion (11) en charge de l'autorisation de ces données, et sont transmises au module de gestion (15), ce dernier étant agencé pour établir une communication avec le centre de gestion (11) concerné pour l'obtention du message d'autorisation (EMM).

10. Système de déchiffrement de données selon l'une des revendications précédentes, **caractérisé en ce que** le module de réception et de déchiffrement (14) est intégré dans le dispositif d'exploitation (12).

11. Système de déchiffrement de données selon la revendication 1, **caractérisé en ce que** le module de réception et de déchiffrement (14) comprend des moyens de communication standardisé avec le module de gestion (15) de sorte qu'un module de réception et de déchiffrement (14) puisse dialoguer avec une pluralité de modules de gestion (15).

12. Système de déchiffrement de données selon l'une des revendications précédentes, **caractérisé en ce que** le module de gestion (15) comprend des moyens pour établir une clé d'appariement avec le module de réception (14), cette clé étant destinée à encrypter et décrypter au moins le ou les mots de contrôle (cw) transmis du module de gestion (15) vers le module de réception (14).

## Claims

1. Conditional access data decryption system, this system comprising:
- a diffusion centre (10) arranged to diffuse data encrypted by at least one control word (cw),
- at least two management centres (11) arranged to diffuse personal messages (ECM, EMM) related to the management of access means to encrypted data,
- an operating device (12) intended to render usable said encrypted data, and
- a decoder (13) arranged to decrypt at least one part of the encrypted data, placed between the diffusion centre (10) and the operating device (12),
**characterized in that**
- the decoder (13) comprises a module (14) for the reception and decryption of encrypted data and a module (15) for the management of access rights to this data, these modules being physically different, the reception module (14) being connected to the operating device (12) and the management module (15) being arranged to communicate with the reception module,
- the management module (15) includes a security module (16) comprising a unique identification number (UA) and data allowing securing the connection between the management centres (11) and the security module (16), this security module being arranged to verify the content of the personal messages (ECM, EMM) and to allow or prevent the decryption of the control-word(s) (cw) according to the content of the personal messages,
- the reception module (14) receives the encrypted data originating from said diffusion centres (10) via a first communication line, and the management module (15) receives the personal messages (ECM, EMM) through the management centre (11) via a second communication line
- the security module of the management module comprises data pertaining to said management centres (11) with which these modules are authorized to communicate.

2. Data decryption system according to claim 1, **characterized in that** the communication between the reception module (14) and the management module (15) is a communication by means of waves.

3. Data decryption system according to claim 1, **characterized in that** the rights management module (15) is a mobile telephone.

4. Data decryption system according to claim 3, **characterized in that** the security module (16) includes identification functions necessary for telephony and at least one storage area pertaining to a management centre (11), this area comprising the security parameters for reception of the authorization messages (EMM) of said management centre.

5. System according to claims 1 to 4, **characterized in that** the diffusion centre (10) is arranged to diffuse control messages (ECM) comprising the control-word(s) (cw), and **in that** the personal messages diffused by the management centre (11) correspond to an authorization message (EMM).

6. System according to claims 1 to 4, **characterized in that** the management centres (11) are arranged to diffuse personal messages comprising the control-word(s) (cw), the security module (16) of the management module (15) having means to determine if this message is intended for said security module and means to transmit this control word (cw) to the reception module (14).

7. System according to claim 6, **characterized in that** the reception and decryption module (14) includes a unique decryption key applied to the control word (cw), this key serving to encrypt the control-words at the management centre (11) before their transmission towards the management module (15).

8. Data decryption system according to claim 1, **characterized in that** the security module (16) of the management module (15) includes security parameters for the reception of the authorization messages (EMM) originating from different management centres (11).

9. Data decryption system according to claims 1 to 8, the diffusion centre (10) being arranged to transmit descriptive information of the encrypted data, **characterized in that** this data contains indications necessary for the establishment of communication with the management centre (11) that is responsible for the authorization of this data, and is transmitted to the management module (15), the latter being arranged to establish communication with the management centre (11) in question to obtain the authorization message (EMM).

10. Data decryption system according to one of the previous claims, **characterized in that** the reception and decryption module (14) is integrated into the operating device (12).

11. Data decryption system according to claim 1, **characterized in that** the reception and decryption module (14) includes standardized communication means with the management module (15) so that a reception and decryption module (14) can interact with a plurality of management modules (15).

12. Data decryption system according to one of the previous claims, **characterized in that** the management module (15) includes means to establish a pairing key with the reception module (14), this key being intended to encrypt and decrypt at least the control-word(s) (cw) transmitted to the management module (15) towards the reception module (14).

## Patentansprüche

1. Entschlüsselungssystem für Daten mit bedingtem Zugriff, wobei in diesem System implementiert sind:
- ein Sendezentrum (10), das dafür eingerichtet ist, mit zumindest einem Prüfwort (cw) verschlüsselte Daten zu senden,
- zumindest zwei Verwaltungszentren (11), die dafür eingerichtet sind, persönliche Nachrichten (ECM, EMM) bezüglich der Verwaltung der Mittel für den Zugriff auf die verschlüsselten Daten zu senden,
- eine Nutzungsvorrichtung (12), die dafür bestimmt ist, die verschlüsselten Daten nutzbar zu machen, und
- ein Dekodierer (13), der dafür eingerichtet ist, zumindest einen Teil der verschlüsselten Daten zu entschlüsseln, und zwischen dem Sendezentrum (10) und der Nutzungsvorrichtung (12) angeordnet ist,
**dadurch gekennzeichnet, dass**
- der Dekodierer (13) aus einem Modul (14) für den Empfang und die Entschlüsselung der verschlüsselten Daten und einem Modul (15) für die Verwaltung der Rechte für den Zugriff auf diese Daten besteht, wobei diese Moduln physisch getrennt sind, indem das Empfangsmodul (14) mit der Nutzungsvorrichtung (12) verbunden ist und das Verwaltungsmodul (15) dafür eingerichtet ist, mit dem Empfangsmodul zu kommunizieren,
- **dadurch**, dass das Verwaltungsmodul (15) ein Sicherheitsmodul (16) umfasst, das eine eindeutige Identifizierungsnummer (UA) sowie Daten umfasst, die es gestatten, die Verbindung zwischen den Verwaltungszentren (11) und dem Sicherheitsmodul (16) zu sichern, wobei dieses Sicherheitsmodul dafür eingerichtet ist, den Inhalt der persönlichen Nachrichten (ECM, EMM) zu überprüfen und die Entschlüsselung des oder der Prüfwörter (cw) in Abhängigkeit vom Inhalt der persönlichen Nachrichten zu gestatten oder zu verhindern,
- **dadurch**, dass das Empfangsmodul (14) verschlüsselte Daten empfängt, die über einen ersten Kommunikationsweg von den Sendestationen (10) kommen, und das Verwaltungsmodul (15) persönliche Nachrichten (ECM, EMM) durch das Verwaltungszentrum (11) über einen zweiten Kommunikationsweg empfängt,
- und **dadurch**, dass das Sicherheitsmodul des Verwaltungsmoduls Daten umfasst, die den Verwaltungszentren (11) eigen sind, mit denen es zu kommunizieren befähigt ist.

2. Entschlüsselungssystem für Daten nach Anspruch 1, **dadurch gekennzeichnet, dass** die Kommunikation zwischen dem Empfangsmodul (14) und dem Verwaltungsmodul (15) eine Kommunikation über Wellen ist.

3. Entschlüsselungssystem für Daten nach Anspruch 1, **dadurch gekennzeichnet, dass** das Modul (15) für die Verwaltung der Rechte ein tragbares Telefon ist.

4. Entschlüsselungssystem für Daten nach Anspruch 3, **dadurch gekennzeichnet, dass** das Sicherheitsmodul (16) Identifizierungsfunktionen, die für die Telefonie erforderlich sind, sowie zumindest einen Speicherbereich umfasst, der einem Verwaltungszentrum (11) eigen ist, wobei dieser Bereich die Sicherheitsparameter für den Empfang der Berechtigungsnachrichten (EMM) vom Verwaltungszentrum umfasst.

5. System nach Ansprüchen 1 bis 4, **dadurch gekennzeichnet, dass** das Sendezentrum (10) dafür eingerichtet ist, Kontrollnachrichten (ECM) zu senden, die das oder die Prüfwörter (cw) umfassen, und **dadurch**, dass die von den Verwaltungszentren (11) gesendeten persönlichen Nachrichten einer Berechtigungsnachricht (EMM) entsprechen.

6. System nach Ansprüchen 1 bis 4, **dadurch gekennzeichnet, dass** die Verwaltungszentren (11) dafür eingerichtet sind, persönliche Nachrichten zu senden, die das oder die Prüfwörter (cw) umfassen, wobei das Sicherheitsmodul (16) des Verwaltungsmoduls (15) über Mittel verfügt, um festzustellen, ob diese Nachricht für das Modul bestimmt ist, sowie über Mittel, um dieses Prüfwort (cw) an das Empfangsmodul (14) zu übermitteln.

7. System nach Anspruch 6, **dadurch gekennzeichnet, dass** das Empfangs- und Entschlüsselungsmodul (14) einen eindeutigen Dekodierschlüssel umfasst, der auf das Prüfwort (cw) angewendet wird, wobei dieser Schlüssel dazu dient, die Prüfwörter vor ihrer Übermittlung zum Verwaltungsmodul (15) im Verwaltungszentrum (11) zu kodieren.

8. Entschlüsselungssystem für Daten nach Anspruch 1, **dadurch gekennzeichnet, dass** das Sicherheitsmodul (16) des Verwaltungsmoduls (15) Sicherheitsparameter für den Empfang der von unterschiedlichen Verwaltungszentren (11) kommenden Berechtigungsnachrichten (EMM) umfasst.

9. Entschlüsselungssystem für Daten nach Ansprüchen 1 bis 8, wobei das Sendezentrum (10) dafür eingerichtet ist, die verschlüsselten Daten beschreibende Informationen zu übermitteln, **dadurch gekennzeichnet, dass** diese Daten Angaben enthalten, die für den Aufbau einer Kommunikation mit dem Verwaltungszentrum (11) erforderlich sind, das mit der Autorisierung dieser Daten betraut ist, und an das Verwaltungsmodul (15) übermittelt werden, wobei letzteres dafür eingerichtet ist, eine Kommunikation mit dem Verwaltungszentrum (11) aufzubauen, das für die Erlangung der Berechtigungsnachricht (EMM) zuständig ist.

10. Entschlüsselungssystem für Daten nach einem der vorangehenden Ansprüche, **dadurch gekennzeichnet, dass** das Empfangs- und Entschlüsselungsmodul (14) in die Nutzungsvorrichtung (12) integriert ist.

11. Entschlüsselungssystem für Daten nach Anspruch 1, **dadurch gekennzeichnet, dass** das Empfangs- und Entschlüsselungsmodul (14) genormte Mittel für die Kommunikation mit dem Verwaltungsmodul (15) umfasst, so dass ein Empfangs- und Entschlüsselungsmodul (14) mit einer Mehrzahl von Verwaltungsmoduln (15) kommunizieren kann.

12. Entschlüsselungssystem für Daten nach einem der vorangehenden Ansprüche, **dadurch gekennzeichnet, dass** das Verwaltungsmodul (16) Mittel umfasst, um einen Schlüssel zur Paarung mit dem Empfangsmodul (14) aufzustellen, wobei dieser Schlüssel dafür bestimmt ist, zumindest das oder die Prüfwörter (cw) zu kodieren und dekodieren, die vom Verwaltungsmodul (15) zum Empfangsmodul (14) übermittelt werden.
